# EUROPÄISCHE PATENTSCHRIFT

(11) **EP 2 366 570 B1**
(45) Veröffentlichungstag und Bekanntmachung des Hinweises auf die Patenterteilung: **20.04.2016**
(21) Anmeldenummer: 11466002.0
(22) Anmeldetag: 28.02.2011
(51) Int. Cl.: B60J 7/00, B60R 13/02, B62D 65/06

(54) **Anbindung des Dachhimmels und des Schiebedachs des Fahrzeugs**
Connection of the headliner and the sliding roof of a vehicle
Connection de la toiture avec un toit coulissant de véhicule

(30) Priorität: 01.03.2010 CZ 20100144
(43) Veröffentlichungstag der Anmeldung: 21.09.2011
(73) Patentinhaber: Skoda Auto a.s., 293 60 Mladá Boleslav (CZ)
(72) Erfinder: Budinský, Marek, 78832 Staré Mesto pod Sneznikem (CZ); Pinkas, Josef, 29301 Mladá Boleslav (CZ)

(56) Entgegenhaltungen:
- EP-A2- 1 088 749
- EP-A2- 1 295 745
- DE-A1- 10 024 237
- DE-A1-102005 008 678
- US-A- 4 923 245

## Beschreibung

### Technisches Gebiet

Die Erfindung betrifft die Verbindung des Dachhimmels und des Schiebedachs eines Fahrzeuges, die umlaufend im Bereich des Schiebedach ausgebildet ist und ein Rahmenprofil, das in einer zwischen dem Dachhimmel und dem Schiebedach des Fahrzeuges entstandene Spalte angeordnet ist, umfasst.

### Bisheriger Stand der Technik

Derzeit sind nach dem Technikstand im betreffenden Bereich gleich mehrere ähnliche Ausführungen der Anbindung evtl. Verbindung des Dachhimmels an das Schiebedach evtl. Dachfenster bekannt, die von verschiedenen Automobilbauern genutzt werden.
Eine dieser Lösungen nutzt einen versteifenden Metallrahmen mit eingehakten Befestigungen. Dieser Rahmen ist dabei ein untrennbarer Bestandteil des Dachhimmels und wird zum Dachmodul durch Einrasten in die Leiste befestigt (lackiertes Aluminium T-Profil), die ein Bestandteil des Schiebedach ist.
In einer weiteren Ausführung wird ein versteifender Metallrahmen mit einem unregelmäßigen "S"-Profil eingesetzt, der im vorderen und hinteren Teil zusätzliche "L"-Profile aufweist, nach derer Befestigung die Form "C" erreicht wird. Der Versteifungsrahmen stellt zusammen mit den Leisten einen untrennbaren Bestandteil des Dachhimmels dar und wird durch Einhaken im vorderen und hinteren Bereich zum Schiebedachmodul befestigt.
Analog bildet der versteifende Metallrahmen in einer weiteren Ausführung eine Gesamtheit mit dem Dachhimmel. Die Verbindung entsteht durch den Druckverschluss, sog. Dual-Lock, analog einem Klettverschluss.
Eine andere Lösung stellt die Kederausführung der Verbindung dar. Der Rand des Dachhimmels ist entsprechend ausgeformt und mit einem elastischen Keder (biegsames "C"-Profil) an den Tragrahmen des Schiebedachs befestigt.
Angesichts der Fertigungsstückzahl der mit entsprechenden Systemen ausgestatteten Fahrzeuge liegt der Nachteil dieser genannten Lösungen im hohen Preis der Versteifungsrahmen und somit der ganzen Systeme. Weiterer Nachteil einiger oben genannter bestehender Systeme liegt darin, dass Sie oft sehr massiv sind. Neben dem Gewicht können insbesondere die hohe Anzahl der Teile, langwierige sowie aufwändige Vorbereitung vor dem eigentlichen Einbau des Dachhimmels genannt werden. Bei vom Konzept her einfacheren Ausführungen darf die geringere Qualität oder diejenige Lösungen nicht vergessen werden, welche substantiell ein Potential der Problementstehung bei umliegenden Anschlussteilen (offene Spalte - sichtbarer Falz, ungewünschtes Durchdringen der Lichtstrahlung usw.) enthält.

Weitere bekannte Lösung, beschrieben im Dokument EP1295745, ist die Lösung des Fahrzeugdaches mit seitlichen festen Dachteilen und wenigstens einem zwischen diesen befestigbaren Dachmodul und mit einer den Verbindungsbereich zwischen den seitlichen Dachteilen und dem Dachmodul abdeckenden Zierleiste. Die Aufgabe dieser Lösung liegt darin, dass das Dachmodul mit einer Befestigungsvorrichtung versehen ist, an welcher die Zierleiste befestigt ist. Diese Befestigungsvorrichtung weist einen im Wesentlichen horizontal verlaufenden Clip zur Befestigung an einer Rippe des Dachmoduls auf. Der Bereich des Dachmoduls, an dem die Befestigungsvorrichtung angeordnet ist, ist gegenüber der Oberfläche des Dachmoduls abgesenkt. Die Befestigungsvorrichtung weist zur Halterung der Halterippe der Zierleiste einen vertikalen Clip auf, wobei der vertikale Clip und/oder die Halterippe ein zusammenwirkendes Rastprofil aufweise. Die Befestigungsvorrichtung weist weiter hakenförmige Federelemente auf, die beim eingebauten Dachmodul einerseits dieses Dachmodul und anderseits den anliegenden Dachteil elastisch abstützen und dadurch die Befestigungsvorrichtung in dem Zwischenraum zwischen dem Dachmodul und dem seitlichen Dachteil zentrieren. Die Zierleiste weist wenigstens eine Dichtung zur Anlage am Dachmodul bzw. am seitlichen Dachteil auf, wobei die Zierleiste wenigstens eine Dichtungsaufnahme zur Befestigung an die Dichtung aufweist. Der Nachteil der oben genannten Lösung liegt darin, dass diese eine Befestigungsvorrichtung mit komplizierter Konstruktion umfasst, was diese Lösung finanziell nachteilig macht.

Dokument US 4923245 offenbart weiter eine Anbindung eines Dachhimmels an ein Fahrzeugschiebedach nach dem Oberbegriff des Anspruchs 1.

### Darstellung der Erfindung

Die Aufgabe wird durch eine Verbindung des Dachhimmels, der im Bereich der Öffnung des Schiebedachs einen Versteifungsrahmen und Träger aufweist, mit dem Fahrzeugschiebedach gelöst, das umlaufend einen Tragrahmen mit einer Rippe aufweist. Die eigentliche Verbindung wird durch das in der Fuge zwischen dem Dachhimmel und dem Fahrzeugschiebedach angeordneten Rahmenprofil gebildet. Das Rahmenprofil umfasst einen Unter-, Mittel- und Oberteil in T-Form, der einen linken und rechten Ausläufer aufweist. Die Darstellung der Erfindung liegt darin, dass der Tragrahmen einen unter der Rippe des Tragrahmens angeordneten Zusatzteil aufweist. Ferner dann darin, dass das Rahmenprofil einen im Mittelteil des Profils ausgestalteten keilförmigen Knick aufweist, der für das Einkeilen in den freien Bereich zwischen der Rippe und dem Zusatzteil des Tragrahmens und zur Anlage am Zusatzteil angepasst ist. Der Unterteil des Rahmenprofils weist eine lokal mit dem Versteifungsrahmen des Dachhimmels festverbundene Durchbiegung auf. Das Rahmenprofil ist so ausgestaltet, dass der linke Ausläufer eine schwimmende Direktverbindung mit dem Schiebedach und der rechte Ausläufer eine schwimmende Direktverbindung mit dem Dachhimmel bildet und zugleich der keilförmige Knick des Profils mit dem Zusatzteil des Tragrahmens im Kontakt ist. Das Rahmenprofil ist als elastisch verformbarer Teil aus einem elastisch nachgiebigen Material ausgebildet. Der Zusatzteil kann als ein fester, untrennbarer Bestandteil des Tragrahmens des Schiebedachs oder als ein zum unteren Rand des Tragrahmens zu befestigender separater Teil ausgestaltet werden.
Aus dem oben genannten geht hervor, dass die vorliegende Erfindung die Verbindung des Dachhimmels mit dem Schiebedach durch eine einfache Konstruktion des Knicks des Rahmenprofils unter Verwendung eines an dem Tragrahmen des Schiebedachs befestigten keilförmigen Zusatzteil so gelöst wird, dass im Gegensatz zu EP1295745 eine zusätzliche Befestigungsvorrichtung entfällt. Eine Befestigung mit horizontalen und vertikalen Clips der Befestigungsvorrichtung ist hier nicht notwendig. Im Gegensatz zu der Lösung EP1295745, wo die Befestigungsvorrichtung nur seitlich der Dachöffnung angeordnet ist (im vorderen und hinteren Bereich nicht), ist die in der vorliegenden Erfindung angeführte Lösung der Verbindung stetig entlang des ganzen Umfangs der Dachöffnung angeordnet, was die Konstruktion stabiler macht. Ferner ist hier eine direkte Verbindung des Rahmenprofils mit dem Schiebedach und zugleich des Rahmenprofils mit dem Dachhimmel ausgebildet, im Gegensatz zur Lösung EP1295745, wo zusätzlich die Randbefestigungen und Dichtungen verwendet wurden.

### Übersicht der Figuren der Zeichnungen

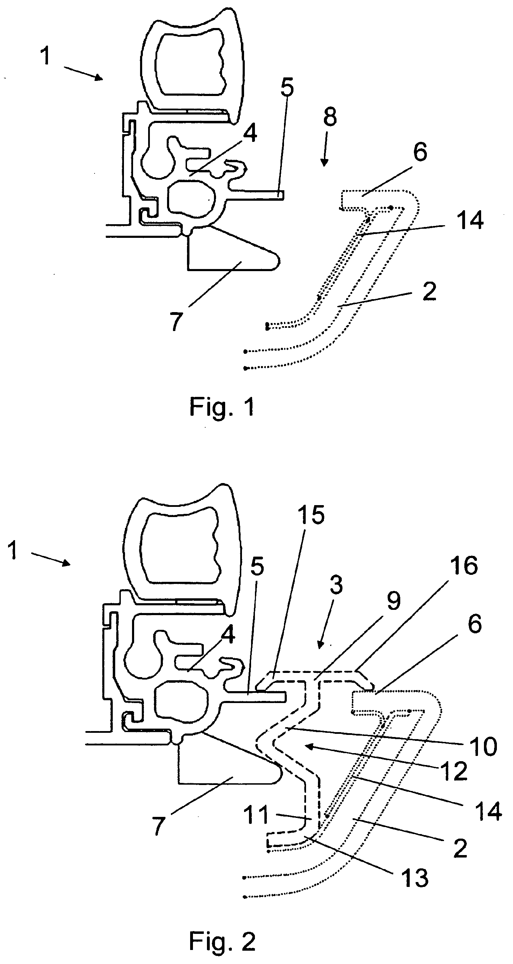

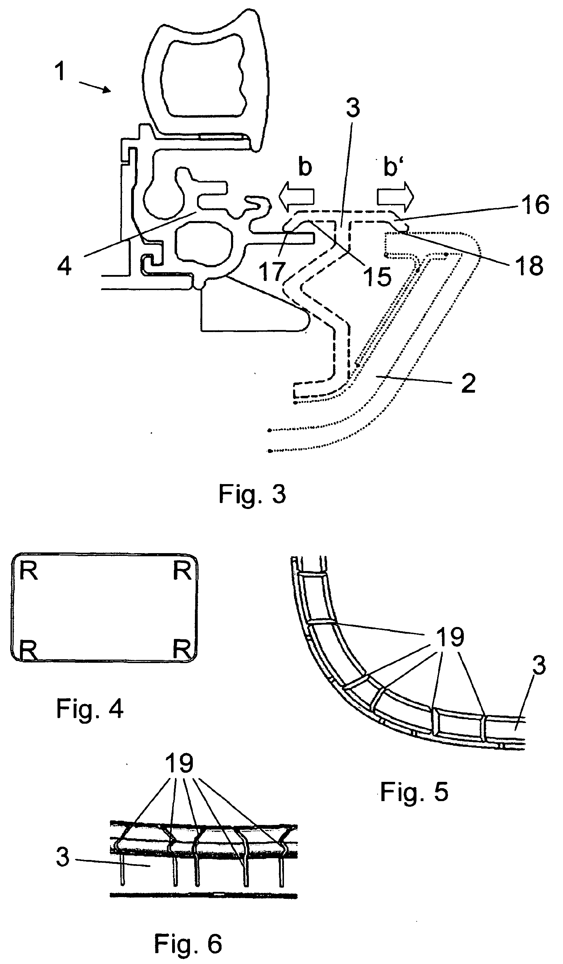

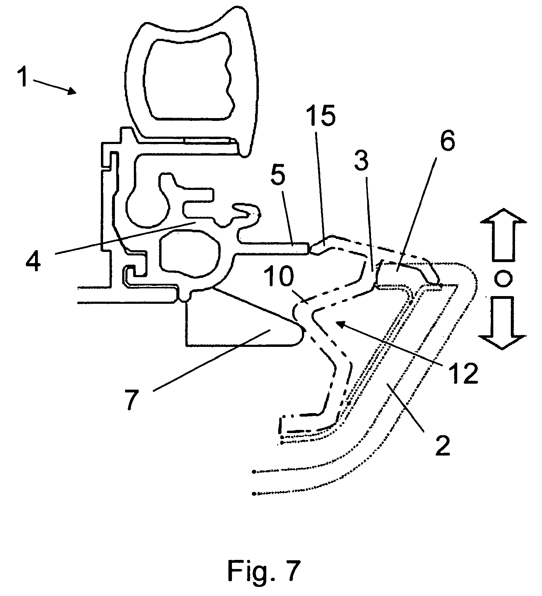

In der Fig. 1 ist in einem schematischen Schnitt das Profil des Schiebedachs und des Dachhimmels, in der Fig. 2 in einem schematischen Schnitt die Verbindung des Schiebedachs und des Dachfensters des Fahrzeuges, in der Fig. 2 in einem schematischen Schnitt die Verbindung des Dachhimmels und des Schiebedachs des Fahrzeuges mit dargestellter ausgleichender Bewegung des Rahmenprofils, in der Fig. 4 sind in einer Draufsicht schematisch die Ecken der Dachöffnung, in Fig. 5 die Draufsicht und in Fig. 6 die Seitenansicht des Eckendetails des Rahmenprofils mit dargestellten Formeinschnitten, in der Fig. 7 im schematischen Schnitt der Verbindung des Dachhimmels mit dem Schiebedach des Fahrzeuges der Einbau- bzw. Ausbauprozess dargestellt.

### Ausführungsbeispiel der Erfindung

Ein Schiebedach 1 des Fahrzeuges, nach Fig. 1, weist an seinem Umfang einen Tragrahmen 4 auf, der eine Rippe 5 umfasst. Der Dachhimmel 2 umfasst im Bereich der Öffnung des Schiebedachs 1 einen Versteifungsrahmen 14 und einen Träger 6. Zwischen dem Dachhimmel 2 und dem Schiebedach 1 des Fahrzeuges entsteht eine Fuge 8.
Das System der Anbindung bzw. Verbindung des Dachhimmels 2 mit der Einheit des Schiebedachs (Auszieh- bzw. Ausstelldaches) 1 rechnet mit einer Anpassung des Tragrahmens 4 des Schiebedachs 1. Dieser Rahmen 4 weist einen profilierten Zusatzteil 7 aus Kunststoff oder Aluminium auf (in der Regel gleiches Material, wie beim Haupttragrahmen), der zu dem Haupttragrahmen 4 mit Schrauben, Nieten befestigt oder angeklebt werden kann, eventuell wird dieser zusammen mit dem Tragrahmen so gefertigt, dass er seinen untrennbaren Bestandteil bildet. Der Zusatzteil 7 ist unter der Rippe 5 auf dem unteren Rand des Rahmens 4 des Schiebedachs 1 angeordnet.
Das grundlegende Funktionselement des ganzen Systems der Verbindung und des Anbindungskonzeptes des Dachhimmels 2 an den Tragrahmen 4 des Schiebedachs 1 des Fahrzeuges, nach Fig. 2, ist das schwenkbare Rahmenprofil 3, das in der Fuge 8 angeordnet ist, die zwischen dem Dachhimmel 2 und dem Schiebedach 1 des Fahrzeuges ausgebildet ist. Das Rahmenprofil 3 umfasst einen Unterteil 11, einen Mittelteil 10 und einen Oberteil 9 in T-Form, der einen linken Ausläufer 15 und einen rechten Ausläufer 16 aufweist. Das Rahmenprofil 3 weist weiter in seinem Mittelteil 10 einen ausgebildeten keilförmigen Knick 12 auf. Die Form dieses Knicks 12 ist für das Einkeilen in den freien Bereich angepasst, der zwischen der Rippe 5 und dem Zusatzteil 7 des Tragrahmens 4 ausgebildet ist. Gleichzeitig setzt dieser Knick 12 auf den Zusatzteil 7 auf. Das Rahmenprofil 3 weist in seinem Unterteil 11 eine Durchbiegung 13 auf, die lokal mit dem,Versteifungsrahmen 14 des Dachhimmels 2 festverbunden ist.
Das Rahmenprofil 3 ist als elastisch verformbarer Teil aus einem elastisch nachgiebigen Material ausgebildet. Der Zusatzteil 7 kann als ein fester, untrennbarer Bestandteil des Tragrahmens 4 des Schiebedachs 1 oder als ein zum unteren Rand des Tragrahmens 4 zu befestigender separater Teil ausgestaltet werden. Das Rahmenprofil 3 ermöglicht durch seine Konstruktionsanordnung den Einbau bzw. Ausbau ausschließlich in der Vertikalrichtung und sorgt für die Abdeckung der Fuge 8 zwischen dem Dachhimmel 2 und dem Schiebedachs 1.
Das Rahmenprofil 3 ist so ausgestaltet, das der linke Ausläufer 15 eine schwimmende Direktverbindung mit dem Schiebedach 1 und der rechte Ausläufer 16 eine schwimmende Direktverbindung mit dem Dachhimmel 2 bildet und zugleich der keilförmige Knick 12 des Rahmenprofils 3 im Kontakt mit dem Zusatzteil 7 des Tragrahmens 4 ist.
Die Konstruktion des Anbindungssystems sorgt mit ihrer schwimmenden Verankerung des Rahmenprofils 3 für den Ausgleich der Toleranzen zwischen dem Schiebedach 1 und dem Dachhimmel 2. Gleichzeitig sorgt sie auch für die Abdeckung der Fuge und verhindert somit die Entstehung eventueller Probleme mit den umliegenden Anschlussteilen (optische Fehler, Lichtdurchdringung usw.). Das System eliminiert den Einsatz eines Verbindungsglieds (verbindendes Zwischenstück - Profilleiste) und bietet neben der Gewichtsreduzierung auch ein Potential geringerer Kosten.
Die Möglichkeit der Positionsänderung des Rahmenprofils 3 durch die Druckeinwirkung der umliegenden Teile ergibt sich aus seiner lokalen Verbindung mit dem Versteifungsrahmen 14 des Dachhimmels 2 im unteren Teil 11 des Rahmenprofils 3 und aus daraus resultierender Federung im Bereich der elastischen Verformung aufgrund des nachgiebigen Materials (in der Regel Kunststoff) des Rahmenprofils 3.
Das Rahmenprofil 3 weist am Ende des linken Ausläufers 15 des Oberteils 9 an der Kontaktstelle mit der Rippe 5 des Tragrahmens 4 des Schiebedachs 1 eine Aufsetzfläche 17 auf. Analog weist das Rahmenprofil 3 am Ende des rechten Ausläufers 16 des Oberteils 9 an der Kontaktstelle mit dem Träger 6 des Dachhimmels 2 eine Aufsetzfläche 18 auf. Das Rahmenprofil 3 bildet mit seinen Aufsetzflächen 17, 18 mit dem Grundtragrahmen 4 des Schiebedachs 1 und dem Dachhimmel 2 eine gegenseitig schwimmende Verbindung. Die nach oben offene Fuge 8 zwischen dem Grundtragrahmen 4 des Schiebedachs 1 und dem Dachhimmel 2 wird so durch die Formausführung des Rahmenprofils 3 abgedeckt. Durch den Überhang des Rahmenprofils 3, d.h. dass die Fuge 8 zwischen dem Grundtragrahmen 4 und dem Dachhimmel 2 geringer ist als die Breite des T-Profils des Oberteils 9 des Rahmenprofils 3, sind die Aufsetzflächen 17 und 18 ausreichend von den Rändern beider Teile entfernt und ermöglichen so den Ausgleich der Montage- und Funktionstoleranzen durch die gegenseitige Bewegung aller Teile in Schwenkrichtungen b und b', wie in der Fig. 3. dargestellt ist.
Das Rahmenprofil 3, in der Dachöffnung für das Schiebedach (Auszieh- bzw. Ausstelldach) zwischen dem Dachhimmel 2 und dem Schiebedach 1 angeordnet, weist in allen vier Ecken R, nach Fig. 4, Formeinschnitte 19 auf, wie in der Fig. 5 und 6 dargestellt ist. Diese Einschnitte 19 verursachen die Federung einzelner, durch die Einschnitte 19 von sonstigen Teilen des Rahmenprofils 3 getrennter Teile des Profils 3 und sorgen so für die Verbindung auch in diesen kritischen Formbereichen. Der Formeinschnitt 19 ist so ausgebildet, das er eine Einsicht auf die Teile des Grundtragrahmens 4 sowie Dachhimmels 2, mit denen er im Kontakt ist, nicht ermöglicht. Dadurch, dass die Einschnitte 19 geformt ausgeführt sind, wird zugleich eine sichtbare und von oben offene Fuge auch in diesem Eckenbereich verhindert, was eine vorteilhafte Auswirkung auf die optischen Eigenschaften des Systems bei Draufsicht hat, d.h. die Einschnitte oder Fugen gewähren keine Einsicht zu den Teilen des Grundtragrahmens des Dachfensters oder Dachhimmels. Somit wird nur das Rahmenprofil sichtbar. Dies ist wichtig insbesondere bei unterschiedlicher Farbausführung des Dachhimmels und des Rahmenprofils.
Der Einbau- bzw. Ausbauprozess erfolgt ausschließlich in vertikaler Richtung (Richtung Z-Achse). Der eigentliche Einbau erfolgt so, dass durch den handerzeugten Druck von unten auf die Ränder der Öffnung für das Schiebedach 1 am Dachhimmel 2 das Rahmenprofil 3 mit seiner Formausführung des keilförmigen Knicks 12 im seinen Mittelteil 10 auf des Zusatzteil 7 des Tragrahmens 4 des Schiebedachs 1 aufsetzen wird. Dies erwirkt die Verschwenkung des Rahmenprofils 3, nach Fig. 7, in Richtung zum Dachhimmel 2. Da der Träger 6 einschließlich seines Dekors nachgiebig ist, lässt er leichte Einsenkung des schwenkbaren Rahmenprofils 3 in den Dachhimmel 2 zu. Dadurch wird das Hinausragen des linken Ausläufers 15 des Rahmenprofils 3 über den Rand der Rippe 5 des Tragrahmens 4 des Schiebedachs 1 ermöglicht. Aufgrund der Vorspannung des Rahmenprofils 3 während des Einbaues kehrt dieses Profil 3 nach Überwindung des Randes der Rippe 5 des Tragrahmens 4 des Schiebedachs 1 von selbst in seine Ruheposition zurück. Nun wird das "Einhaken" des Dachhimmels 2 im Schiebedachmodul 1 erzielt, womit eine gegenseitige Verbindung und Anbindung beider Teile erreicht wird. Gleichzeitig wird die Fuge 8 geschlossen und somit die optischen Vorgaben erfüllt und ein Ausgleich der Montage- sowie Funktionstoleranzen durch eventuellen Vorschub in der Y-Achse ermöglicht.
Analog dem Einbau erfolgt auch der Ausbau, jedoch in der Gegenrichtung. Mit handerzeugtem Druck in vertikaler Richtung, dh. in Richtung der Z-Achse, nach unten (in der Pfeilrichtung, nach Fig. 7) wird das Rahmenprofil 3 vom Grundtragrahmen 4 der Schiebedachs 1 weggedrückt und zugleich verschwenkt. Nach der Lockerung wird der Kontakt des Dachhimmels 2 aufgelöst und dieses aus dem Modul des Schiebedachs 1 ausgebaut.
Die Vorteile dieser Lösung liegen im einfachen und schnellen Ein- bzw. Ausbau nur in der Z-Achse, im geringen Gewicht aufgrund des relativ leichten Profilrahmens, in der Verwendbarkeit des Systems bei allen Fahrzeugen mit Schiebedach, sowohl mit hohen, wie auch geringeren Anferderungen auf die Erfüllung der optischen Eigenschaften der Anbindung der Teile.

### Industrielle Nutzbarkeit

Die Lösung der erfindungsgemäßen Anbindung bzw. Verbindung des Dachhimmels und Schiebedachs eines Fahrzeuges kann in allen Fahrzeugen genutzt werden, insbesondere dann bei Personenkraftfahrzeugen, bei denen die Konstruktionsmöglichkeiten ein Ausstell- oder Schiebedach ermöglichen oder sie kann bei Konstruktionslösungen eines Dach- evtl. Panoramafensters eingesetzt werden.

### Verwendete Bezeichnungen

- 1: Fahrzeugschiebedach
- 2: Dachhimmel
- 3: Rahmenprofil
- 4: Tragrahmen des Schiebedachs
- 5: Rippe des Schiebedachs
- 6: Träger des Dachhimmels
- 7: Zusatzteil des Schiebedachs
- 8: Fuge zwischen Dachhimmel und Schiebedach
- 9: Oberteil des Rahmenprofils
- 10: Mittelteil des Rahmenprofils
- 11: Unterteil des Rahmenprofils
- 12: keilförmiger Knick des Mittelteils des Rahmenprofils
- 13: Durchbiegung des Unterteils des Rahmenprofils
- 14: Versteifungsrahmen des Dachhimmels
- 15: linker Ausläufer des Oberteils des Rahmenprofils
- 16: rechter Ausläufer des Oberteils des Rahmenprofils
- 17: Aufsetzfläche des linken Ausläufers des Rahmenprofils
- 18: Aufsetzfläche des rechten Ausläufers des Rahmenprofils
- 19: Formeinschnitt des Rahmenprofils
- R: Ecke der Dachöffnung mit Schiebedach
- b,b': Schwenkrichtung des Rahmenprofils

## Patentansprüche

1. Anbindung eines Dachhimmels (2), der im Bereich der Öffnung des Schiebedachs (1) einen Versteifungsrahmen (14) und Träger (6) umfasst,
an das Fahrzeugschiebedach (1), das umlaufend einen Tragrahmen (4) mit einer Rippe (5) aufweist,
wobei die Anbindung durch ein Rahmenprofil (3) gebildet ist, das in der Fuge (8) zwischen dem Dachhimmel (2) und dem Fahrzeugschiebedach (1) angeordnet ist und einen Unterteil (11), Mittelteil (10) und Oberteil (9) in T-Form umfasst, der einen linken Ausläufer (15) und einen rechten Ausläufer (16) aufweist, **dadurch gekennzeichnet, dass** der Tragrahmen (4) ein unter der Rippe (5) des Tragrahmens (4) angeordnetes Zusatzteil (7) aufweist
und das Rahmenprofil (3) einen im Mittelteil (10) des Profils (3) ausgestalteten keilförmigen Knick (12) aufweist, der für das Einkeilen in den freien Bereich zwischen der Rippe (5) und dem Zusatzteil (7) des Tragrahmens (4) und zugleich zum Aufsetzen am Zusatzteil (7) angepasst ist,
und dass das Rahmenprofil (3) eine direkte Verbindung mit dem Schiebedach (1) und zugteich mit dem Dachhimmel (2) aufweist,
und dass der Unterteil (11) des Rahmenprofils (3) mit dem Versteifungsrahmen (14) des Dachhimmels (2) festverbunden ist.

2. Die Anbindung nach Anspruch 1 **dadurch gekennzeichnet, dass** der Unterteil (11) des Rahmenprofils (3) eine lokal mit dem Versteifungsrahmen (14) des Dachhimmels (2) festverbundene Durchbiegung (13) aufweist.

3. Die Anbindung nach vorherigen Ansprüchen **dadurch gekennzeichnet, dass** das Rahmenprofil (3) so ausgestaltet ist, dass der linke Ausläufer (15) eine schwimmende Direktverbindung mit dem Schiebedach (1) und der rechte Ausläufer (16) eine schwimmende Direktverbindung mit dem Dachhimmel (2) bildet und zugleich der keilförmige Knick (12) des Profils (3) mit dem Zusatzteil (7) des Tragrahmens (4) im Kontakt ist.

4. Die Anbindung nach vorherigen Ansprüchen **dadurch gekennzeichnet, dass** das Rahmenprofil (3) in allen Ecken (R) der Dachöffnung mit dem Schiebedach (1) Formeinschnitte (19) aufweist.

5. Die Anbindung nach vorherigen Ansprüchen **dadurch gekennzeichnet, dass** das Rahmenprofil (3) als elastisch verformbarer Teil aus einem elastisch nachgiebigen Material ausgebildet ist.

6. Die Anbindung nach vorherigen Ansprüchen **dadurch gekennzeichnet, dass** der Zusatzteil (7) als ein fester, untrennbarer Bestandteil des Tragrahmens (4) des Schiebedachs (1) ausgebildet ist.

7. Die Anbindung nach den Ansprüchen 1 bis 5 **dadurch gekennzeichnet, dass** der Zusatzteil (7) als ein zum unteren Rand des Tragrahmens (4) des Schiebedachs (1) zu befestigender separater Teil ausgebildet ist.

## Claims

1. Connection of a headliner (2), which comprises a stiffening frame (14) and a support (6) in the region of the opening in the sliding roof (1), to the vehicle sliding roof (1), which peripherally has a supporting frame (4) with a rib (5), wherein the connection is formed by a frame profile (3) which is arranged in the gap (8) between the headliner (2) and the vehicle sliding roof (1) and comprises a lower part (11), central part (10) and upper part (9) which is T-shaped and has a left branch (15) and a right branch (16), **characterized in that** the supporting frame (4) has an additional part (7) arranged below the rib (5) of the supporting frame (4), and the frame profile (3) has a wedge-shaped bend (12) which is formed in the central part (10) of the profile (3) and is adapted for wedging into the free region between the rib (5) and the additional part (7) of the supporting frame (4) and at the same time for placing on the additional part (7), and **in that** the frame profile (3) has a direct connection to the sliding roof (1) and at the same time to the headliner (2), and **in that** the lower part (11) of the frame profile (3) is fixedly connected to the stiffening frame (14) of the headliner (2).

2. Connection according to Claim 1, **characterized in that** the lower part (11) of the frame profile (3) has a deflection (13) which is fixedly connected locally to the stiffening frame (14) of the headliner (2).

3. Connection according to the preceding claims, **characterized in that** the frame profile (3) is configured in such a manner that the left branch (15) forms a floating direct connection to the sliding roof (1) and the right branch (16) forms a floating direct connection to the headliner (2) and at the same time the wedge-shaped bend (12) of the profile (3) is in contact with the additional part (7) of the supporting frame (4).

4. Connection according to the preceding claims, **characterized in that** the frame profile (3) has shaped incisions (19) in all of the corners (R) of the roof opening with the sliding roof (1).

5. Connection according to the preceding claims, **characterized in that** the frame profile (3) is designed as an elastically deformable part made from an elastically flexible material.

6. Connection according to the preceding claims, **characterized in that** the additional part (7) is designed as a fixed, nonseparable component of the supporting frame (4) of the sliding roof (1).

7. Connection according to Claims 1 to 5, **characterized in that** the additional part (7) is designed as a separate part which is to be fastened to the lower edge of the supporting frame (4) of the sliding roof (1).

## Revendications

1. Connexion d'un ciel de toit (2) qui, dans la région de l'ouverture du toit ouvrant (1), comprend un cadre de rigidification (14) et des supports (6), au toit ouvrant de véhicule (1) qui présente sur son pourtour un cadre porteur (4) avec une nervure (5),
la connexion étant formée par un profilé de cadre (3) qui est disposé dans le joint (8) entre le ciel de toit (2) et le toit ouvrant de véhicule (1) et comprend une partie inférieure (11), une partie centrale (10) et une partie supérieure (9) en forme de T qui présente une ramification gauche (15) et une ramification droite (16), **caractérisée en ce que** le cadre porteur (4) présente une pièce supplémentaire (7) disposée sous la nervure (5) du cadre porteur (4), et **en ce que** le profilé de cadre (3) présente un coude (12) en forme de coin configuré dans la partie centrale (10) du profilé (3), qui est prévu pour s'emboîter dans la région libre entre la nervure (5) et la pièce supplémentaire (7) du cadre porteur (4) et en même temps pour se placer sur la pièce supplémentaire (7), et **en ce que** le profilé de cadre (3) présente une connexion directe avec le toit ouvrant (1) et en même temps avec le ciel de toit (2), et **en ce que** la partie inférieure (11) du profilé de cadre (3) est connectée fixement au cadre de rigidification (14) du ciel de toit (2).

2. Connexion selon la revendication 1, **caractérisée en ce que** la partie inférieure (11) du profilé de cadre (3) présente une courbure (13) connectée fixement localement au cadre de rigidification (14) du ciel de toit (2).

3. Connexion selon les revendications précédentes, **caractérisée en ce que** le profilé de cadre (3) est configuré de telle sorte que la ramification gauche (15) forme une connexion directe flottante avec le toit ouvrant (1) et que la ramification droite (16) forme une connexion directe flottante avec le ciel de toit (2) et en même temps que le coude en forme de coin (12) du profilé (3) soit en contact avec la pièce supplémentaire (7) du cadre porteur (4).

4. Connexion selon les revendications précédentes, **caractérisée en ce que** le profilé de cadre (3) présente, dans tous les coins (R) de l'ouverture du toit avec le toit ouvrant (1), des entailles formées (19).

5. Connexion selon les revendications précédentes, **caractérisée en ce que** le profilé de cadre (3) est réalisé sous forme de pièce déformable élastiquement à partir d'un matériau élastiquement flexible.

6. Connexion selon les revendications précédentes, **caractérisée en ce que** la pièce supplémentaire (7) est réalisée sous forme de constituant fixe inséparable du cadre porteur (4) du toit ouvrant (1).

7. Connexion selon les revendications 1 à 5, **caractérisée en ce que** la pièce supplémentaire (7) est réalisée sous forme de pièce séparée devant être fixée au bord inférieur du cadre porteur (4) du toit ouvrant (1).
